# FASCICULE DE BREVET EUROPEEN

(11) **EP 3 943 800 B1**
(45) Date de publication et mention de la délivrance du brevet: **06.08.2025**
(21) Numéro de dépôt: 21178826.0
(22) Date de dépôt: 10.06.2021
(51) Int. Cl.: F17C 5/02

(54) **PROCÉDÉ DE REMPLISSAGE D'UN RÉSERVOIR DE GAZ LIQUÉFIÉ**
VERFAHREN ZUM BEFÜLLEN EINES FLÜSSIGGASTANKS
METHOD FOR FILLING A LIQUEFIED GAS TANK

(30) Priorité: 21.07.2020 FR 2007658
(43) Date de publication de la demande: 26.01.2022
(73) Titulaire: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventeur: CREVATIN, Stéphane, 38360 SASSENAGE (FR); PEYRON, Jean-Marc, 94503 CHAMPIGNY-SUR-MARNE (FR)
(74) Mandataire: Air Liquide

(56) Documents cités:
- FR-A1- 3 017 183
- JP-A- 2007 303 605
- US-A1- 2011 179 810
- US-B2- 10 415 509

## Description

L'invention concerne un procédé de remplissage d'un réservoir de gaz liquéfié.

US2011179810A1 divulgue un tel procédé de remplissage.

L'invention concerne plus particulièrement un procédé de remplissage d'un réservoir de gaz liquéfié sous pression à partir d'une source de gaz liquéfié utilisant un dispositif de remplissage comprenant un circuit de transfert muni d'une première conduite de transfert de liquide comprenant une première extrémité raccordée à la source de gaz liquéfié et une seconde extrémité raccordée au réservoir de gaz liquéfié, une seconde conduite de transfert de gaz comprenant une première extrémité raccordée un organe de récupération de gaz et une seconde extrémité raccordée audit réservoir à remplir, le circuit comprenant une troisième conduite de transfert et une quatrième conduite de transfert reliant chacune les première et seconde conduites de transfert, le circuit comprenant un ensemble de vanne(s) de contrôle des flux de fluide dans les conduites du circuit, le procédé comprenant, préalablement au transfert de gaz liquéfié de la source de gaz liquéfié vers le réservoir de gaz liquéfié, une dépressurisation du réservoir de gaz liquéfié et un refroidissement d'au moins une partie du circuit de transfert.

Avant la séquence de remplissage d'un réservoir de gaz liquéfié, le circuit (flexible, tuyauterie du réservoir à remplir...) est généralement à température ambiante. L'ensemble doit dans ce cas être refroidi à température du gaz liquéfié avant remplissage (soit 21,7K pour le cas de l'hydrogène liquide).

La mise en froid est actuellement assurée par un flux d'hydrogène liquide provenant du stockage source. Ceci provoque une vaporisation de l'hydrogène liquide pendant toute la mise en froid de la conduite de transfert de liquide. Selon l'installation, entre 5 et 15kg d'hydrogène liquide est évaporé et la durée de l'opération peut varier de 5 à 10 minutes.

Cette mise en froid est une perte de temps et une perte de frigorie du fluide produit par le liquéfacteur ayant rempli la source.

Les molécules froides de la dépressurisation sont généralement récupérées en passant par un réchauffeur et ensuite un compresseur de cycle. Les frigories pourtant coûteuses énergétiquement ne sont pas valorisées.

L'énergie nécessaire à la liquéfaction des gaz de l'air est beaucoup moins importante que l'hydrogène. De ce fait les retours gazeux ne sont pas valorisés et les molécules ne sont pas toujours récupérées.

Dans le cas d'installation d'hélium liquide, la récupération des molécules est généralement réalisée. La récupération des frigories peut être intégrée au système de liquéfaction. L'hélium froid peut être directement injecté à différents paliers du liquéfacteur selon la température du retour gazeux.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce que la dépressurisation du réservoir de gaz liquéfié et le refroidissement du circuit de transfert comprend un transfert de gaz de vaporisation sous pression contenu dans le réservoir de gaz liquéfié via la seconde extrémité de la seconde conduite de transfert de gaz, la troisième la conduite de transfert, la première conduite de transfert, la quatrième conduite de transfert et la première extrémité de la seconde conduite de transfert.

Le gaz froid dépressurisé est ainsi dévié vers la ligne de transfert liquide pour sa mise en froid.

Le procédé permet ainsi de valoriser le gaz froid provenant du réservoir à remplir (avant par exemple de passer ce gaz dans un réchauffeur).

Par ailleurs, des modes de réalisation de l'invention peuvent comporter l'une ou plusieurs des caractéristiques suivantes :
- le gaz de vaporisation sous pression transféré du réservoir de gaz liquéfié à la première extrémité de la seconde conduite de transfert est réchauffé et mis à l'air et/ou comprimé et/ou stocké dans l'organe de récupération de gaz,
- les troisième et quatrième conduites de transfert sont situées respectivement aux deux extrémités du circuit, c'est-à-dire respectivement au niveau des secondes extrémités des première et seconde conduites de transfert et au niveau des premières extrémités des première et seconde conduites de transfert,
- les troisième et quatrième conduites de transfert comprennent chacune un ensemble de vanne(s) respectives,
- le réservoir de gaz liquéfié est, avant sa dépressurisation, à une pression comprise entre 1,2 et 10 bar, par exemple entre 1,4 et 7bar et, après dépressurisation, à une pression comprise entre 1,1 et 1,4 bar,
- le procédé comprend, après la dépressurisation du réservoir de gaz liquéfié et le refroidissement d'au moins une partie du circuit de transfert, une étape de transfert de gaz liquéfié de la source vers le réservoir de gaz liquéfié via la première conduite de transfert,
- le gaz liquéfié est de l'hydrogène ou de l'hélium. L'invention peut concerner également tout procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :

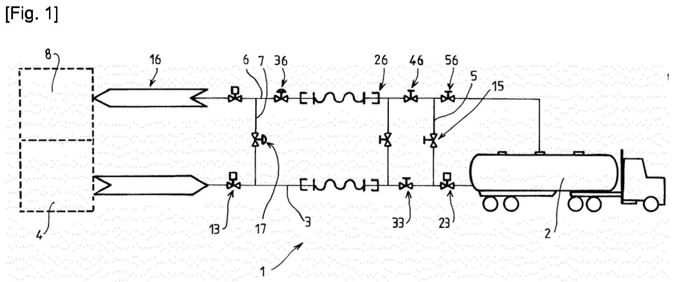

[Fig. 1] représente une vue schématique et partielle illustrant un exemple de configuration et fonctionnement du dispositif et procédé de remplissage selon l'invention.

Le dispositif comprend un circuit de fluide muni d'une première conduite 3 de transfert de liquide comprenant une première extrémité (par exemple à gauche d'une vanne 13 sur la représentation schématique) destinée à être raccordée à une source 4 de gaz liquéfié (notamment à la phase liquide d'un réservoir d'approvisionnement) et une seconde extrémité ( par exemple à droite ou à gauche d'une vanne 23 sur l'illustration schématique) destinée à être raccordée à un réservoir 2 à remplir (notamment à sa phase liquide).

La source 4 comprend typiquement un stockage de gaz liquéfié surmonté d'une phase gazeuse. La source est ou peut être mise sous pression, cette pression pouvant être la force motrice du fluide à transférer. Une pompe de transfert peut être envisagée également.

Le circuit comprend une seconde conduite 6 de transfert de gaz comprenant une première extrémité 16 destinée à être raccordée à la source 4 de gaz liquéfié (par exemple à sa phase gazeuse) ou à un organe 8 de récupération de gaz, et une seconde extrémité destinée à être raccordée audit réservoir 2 à remplir (par exemple à sa phase gazeuse).

Le circuit comprend une troisième conduite 5 de transfert reliant les première 3 et seconde 6 conduites de transfert et munie d'une vanne 15.

Le circuit comprend une quatrième conduite 7 de transfert reliant les première 3 et seconde 6 conduites de transfert et munie d'une vanne 17.

Les troisième 5 et quatrième conduite 7 de transfert sont de préférence situées aux deux extrémités du circuit (respectivement côté réservoir 2 à remplir et côté source 4).

Par exemple, et sans que ceci soit limitatif, la troisième conduite 5 peut faire partie d'une circuiterie solidaire du réservoir 2 et munie de raccords fluidiques tels que des raccords amovibles ou rapides et configurés pour être raccordés à des tuyaux formant les première 3 et seconde conduites 6 (par exemple à droite des portions flexibles représentées symboliquement par des lignes ondulées).

Le circuit comprend un ensemble de vanne(s) de contrôle des flux de fluide dans les conduites du circuit. Par exemple, la première conduite 3 de transfert de liquide comprend au moins une vanne 33 d'isolation et/ou de contrôle de débit.

De même, la seconde conduite 6 de transfert comprend au moins une vanne 36, 46 d'isolation et/ou de contrôle de débit.

Cette architecture permet des remplissages de réservoirs 2 en simple flux (première conduite 3 de liquide uniquement) ou en double flux (première 3 conduite transférant du liquide et seconde 6 conduites évacuant du gaz en sens inverse).

Les troisième 5 et quatrième conduite 7 de transfert comprennent chacune de préférence au moins une vanne 15, 17 d'isolation et/ou de contrôle de débit.

Avant le transfert de gaz liquéfié de la source 4 vers le réservoir 2 de gaz liquéfié, une dépressurisation du réservoir 2 de gaz liquéfié et un refroidissement d'au moins une partie du circuit de transfert doit être réalisé.

Au moins une partie de la dépressurisation du réservoir 2 de gaz liquéfié et le refroidissement du circuit de transfert sont réalisés par un transfert de gaz de vaporisation sous pression contenu dans le réservoir 2 de gaz liquéfié via la seconde extrémité de la seconde conduite 6 de transfert de gaz, la troisième la conduite 5 de transfert, la première conduite 3 de transfert, la quatrième conduite 7 de transfert et la première extrémité 16 de la seconde 6 conduite de transfert.

C'est-à-dire que le flux de gaz froid de dépressurisation est dévié sur au moins une partie de la première conduite 3 de liquide via des déviations formées par les troisième 5 et quatrième conduite 7 de transfert. Ceci peut être obtenu par un pilotage des vannes appropriées (par exemple vannes 15, 33, 17, 56 ouvertes lors de cette dépressurisation, les autres étant fermées).

Cette mise en froid du circuit est ainsi assurée pendant la dépressurisation et l'évaporation du gaz liquéfié au début du remplissage. Pour une application hydrogène, ce processus permet de réduire l'évaporation de 0,02kg à 0,08kg d'hydrogène (H2) selon l'installation.

Ceci permet de valoriser des retours gazeux du réservoir 2 à remplir grâce à la mise en froid de la ligne 3 liquide lors de l'étape de dépressurisation.

Cette solution présente de nombreux avantages.

Ainsi, ce procédé permet un gain sur le bilan énergétique (pas de flash du liquide provenant de la source 4 ou d'un liquéfacteur).

Cette solution permet d'économiser 4 à 14Kg d'hydrogène liquide par mise en froid (à chaque remplissage) selon l'installation.

De plus, cette solution permet un gain de temps sur la séquence de remplissage de réservoirs 2 d'hydrogène (5 à 10 minutes selon l'installation), sans perte de molécules.

Comme illustré, le circuit peut comporter plusieurs conduites transversales reliant la première conduite 3 à la seconde conduite 6, notamment du côté du réservoir 2 à remplir. Par exemple deux conduites transversales sont prévues au niveau de la seconde extrémité et peuvent être munies chacune d'une vanne. Ces deux conduites transversales peuvent être solidaires du réservoir 2. De plus deux vannes 33, 46 peuvent être prévues entre ces deux conduites transversales respectivement sur les première et seconde conduites de transfert.

Le flux de gaz de vaporisation venant du réservoir 2 à remplir peut être conduit dans l'une ou plusieurs de ces conduites transversales via l'ouverture appropriées de l'ensemble de vannes.

## Revendications

1. Procédé de remplissage d'un réservoir (2) de gaz liquéfié sous pression à partir d'une source (4) de gaz liquéfié utilisant un dispositif de remplissage comprenant un circuit de transfert muni d'une première conduite (3) de transfert de liquide comprenant une première extrémité (13) raccordée à la source (4) de gaz liquéfié et une seconde extrémité (23) raccordée au réservoir (2) de gaz liquéfié, une seconde conduite (6) de transfert de gaz comprenant une première extrémité (16) raccordée un organe (8) de récupération de gaz et une seconde extrémité raccordée audit réservoir (2) à remplir, le circuit comprenant une troisième conduite (5) de transfert et une quatrième conduite (7) de transfert, la troisième conduite (5) de transfert et la quatrième conduite (7) de transfert reliant chacune les première (3) et seconde (6) conduites de transfert, le circuit comprenant un ensemble de vanne(s) (36, 46, 13, 33, 15, 17) de contrôle des flux de fluide dans les conduites du circuit, le procédé comprenant, préalablement au transfert de gaz liquéfié de la source (4) de gaz liquéfié vers le réservoir (2) de gaz liquéfié, une dépressurisation du réservoir (2) de gaz liquéfié et un refroidissement d'au moins une partie du circuit de transfert, la dépressurisation du réservoir (2) de gaz liquéfié et le refroidissement du circuit de transfert comprenant un transfert de gaz de vaporisation sous pression contenu dans le réservoir (2) de gaz liquéfié via la seconde extrémité de la seconde conduite (6) de transfert de gaz, la troisième conduite (5) de transfert, la première conduite (3) de transfert, la quatrième conduite (7) de transfert et la première extrémité (16) de la seconde (6) conduite de transfert.

2. Procédé selon la revendication 1, **caractérisé en ce que** le gaz de vaporisation sous pression transféré du réservoir (2) de gaz liquéfié à la première extrémité (16) de la seconde (6) conduite de transfert est réchauffé et mis à l'air et/ou comprimé et/ou stocké dans l'organe (8) de récupération de gaz.

3. Procédé selon la revendication 1 ou 2, **caractérisé en ce que** les troisième (5) et quatrième (7) conduites de transfert sont situées respectivement aux deux extrémités du circuit, c'est-à-dire respectivement au niveau des secondes extrémités des première (3) et seconde (6) conduites de transfert et au niveau des premières extrémités des première (3) et seconde (6) conduites de transfert.

4. Procédé selon l'une quelconque des revendications 1 à 3, **caractérisé en ce que** les troisième (5) et quatrième (7) conduites de transfert comprennent chacune un ensemble de vanne(s) respectives (15, 17).

5. Procédé selon l'une quelconque des revendications 1 à 4, **caractérisé en ce que** le réservoir (2) de gaz liquéfié est, avant sa dépressurisation, à une pression comprise entre 1,2 et 10 bar, par exemple entre 1,4 et 7bar et, après dépressurisation, à une pression comprise entre 1,1 et 1,4 bar.

6. Procédé selon l'une quelconque des revendications 1 à 5, **caractérisé en ce qu'**il comprend, après la dépressurisation du réservoir (2) de gaz liquéfié et le refroidissement d'au moins une partie du circuit de transfert, une étape de transfert de gaz liquéfié de la source (4) vers le réservoir (2) de gaz liquéfié via la première conduite (3) de transfert.

7. Procédé selon l'une quelconque des revendications 1 à 6, **caractérisé en ce que** le gaz liquéfié est de l'hydrogène ou de l'hélium.

## Patentansprüche

1. Verfahren zum Befüllen eines Tanks (2) für verflüssigtes Gas unter Druck ausgehend von einer Quelle (4) für verflüssigtes Gas unter Verwendung einer Füllvorrichtung, die einen Transferkreis umfasst, der mit einer ersten Transferleitung (3) für Flüssigkeit versehen ist, die ein erstes Ende (13), das an die Quelle (4) für verflüssigtes Gas angeschlossen ist, und ein zweites Ende (23), das an den Tank (2) für verflüssigtes Gas angeschlossen ist, umfasst, wobei eine zweite Transferleitung (6) für Gas ein erstes Ende (16), das an ein Organ (8) zur Rückgewinnung von Gas angeschlossen ist, und ein zweites Ende, das an den zu befüllenden Tank (2) angeschlossen ist, umfasst, wobei der Kreis eine dritte Transferleitung (5) und eine vierte Transferleitung (7) umfasst, wobei die dritte Transferleitung (5) und die vierte Transferleitung (7) jede der ersten (3) und zweiten (6) Transferleitungen verbinden, wobei der Kreis eine Anordnung von einem oder mehreren Ventil(en) (36, 46, 13, 33, 15, 17) zur Steuerung der Fluidströme in den Leitungen des Kreises umfasst, wobei das Verfahren, vor dem Transfer von verflüssigtem Gas von der Quelle (4) für verflüssigtes Gas zu dem Tank (2) für verflüssigtes Gas, eine Druckentlastung des Tanks (2) für verflüssigtes Gas und eine Kühlung mindestens eines Teils des Transferkreises umfasst, wobei die Druckentlastung des Tanks (2) für verflüssigte Gas und die Kühlung des Transferkreises einen Transfer von Verdampfungsgas unter Druck, das in dem Tank (2) für verflüssigtes Gas enthalten ist, über das zweite Ende der zweiten Transferleitung 6) für Gas, die dritte Transferleitung (5), die erste Transferleitung (3), die vierte Transferleitung (7) und das erste Ende (16) der zweiten (6) Transferleitung umfasst.

2. Verfahren nach Anspruch 1, **dadurch gekennzeichnet, dass** das Verdampfungsgas unter Druck, das aus dem Tank (2) für verflüssigtes Gas zu dem ersten Ende (16) der zweiten (6) Transferleitung transferiert wird, erwärmt wird und entlüftet wird und/oder verdichtet wird und/oder in dem Organ (8) zur Rückgewinnung von Gas gespeichert wird.

3. Verfahren nach Anspruch 1 oder 2, **dadurch gekennzeichnet, dass** die dritten (5) und vierten (7) Transferleitungen jeweils an den beiden Enden des Kreises gelegen sind, d. h. an den zweiten Enden der ersten (3) und zweiten (6) Transferleitungen beziehungsweise an den ersten Enden der ersten (3) und zweiten (6) Transferleitungen.

4. Verfahren nach einem der Ansprüche 1 bis 3, **dadurch gekennzeichnet, dass** jede der dritten (5) und vierten (7) Transferleitungen eine Anordnung aus einem oder mehreren jeweiligen Ventil(en) (15, 17) umfasst.

5. Verfahren nach einem der Ansprüche 1 bis 4, **dadurch gekennzeichnet, dass** der Tank (2) für verflüssigtes Gas vor seiner Druckentlastung einen Druck zwischen 1,2 und 10 bar, beispielsweise zwischen 1,4 und 7 bar, und nach Druckentlastung einen Druck zwischen 1,1 und 1,4 bar aufweist.

6. Verfahren nach einem der Ansprüche 1 bis 5, **dadurch gekennzeichnet, dass** es, nach der Druckentlastung des Tanks (2) für verflüssigtes Gas und der Kühlung mindestens eines Teils des Transferkreises, einen Schritt des Transfers von verflüssigtem Gas von der Quelle (4) zu dem Tank (2) für verflüssigtes Gas über die erste Transferleitung (3) umfasst.

7. Verfahren nach einem der Ansprüche 1 bis 6, **dadurch gekennzeichnet, dass** das verflüssigte Gas Wasserstoff oder Helium ist.

## Claims

1. Method for filling a tank (2) with pressurized liquefied gas from a source (4) of liquefied gas, using a filling apparatus comprising a transfer circuit provided with a first pipe (3) for liquid transfer comprising a first end (13) connected to the source (4) of liquefied gas and a second end (23) connected to the liquefied gas tank (2), a second pipe (6) for gas transfer comprising a first end (16) connected to a gas recovery member (8) and a second end connected to said tank (2) to be filled, the circuit comprising a third transfer pipe (5) and a fourth transfer pipe (7), the third transfer pipe (5) and the fourth transfer pipe (7) each connecting the first (3) and second (6) transfer pipes, the circuit comprising a set of valves (36, 46, 13, 33, 15, 17) for controlling the flows of fluid in the pipes of the circuit, the method comprising, prior to the transfer of liquefied gas from the source (4) of liquefied gas to the liquefied gas tank (2), a depressurization of the liquefied gas tank (2) and a cooling of at least part of the transfer circuit, the depressurization of the liquefied gas tank (2) and the cooling of the transfer circuit comprising a transfer of pressurized vaporization gas contained in the liquefied gas tank (2) via the second end of the second pipe (6) for gas transfer, the third transfer pipe (5), the first transfer pipe (3), the fourth transfer pipe (7) and the first end (16) of the second transfer pipe (6).

2. Method according to Claim 1, **characterized in that** the pressurized vaporization gas transferred from the liquefied gas tank (2) to the first end (16) of the second transfer pipe (6) is reheated and vented and/or compressed and/or stored in the gas recovery member (8).

3. Method according to Claim 1 or 2, **characterized in that** the third (5) and fourth (7) transfer pipes are situated respectively at the two ends of the circuit, that is to say respectively at the second ends of the first (3) and second (6) transfer pipes and at the first ends of the first (3) and second (6) transfer pipes.

4. Method according to any one of Claims 1 to 3, **characterized in that** the third (5) and fourth (7) transfer pipes each comprise a set of respective valves (15, 17).

5. Method according to any one of Claims 1 to 4, **characterized in that** the liquefied gas tank (2), before its depressurization, is at a pressure of between 1.2 and 10 bar, for example between 1.4 and 7 bar, and, after depressurization, is at a pressure of between 1.1 and 1.4 bar.

6. Method according to any one of Claims 1 to 5, **characterized in that** it comprises, after the depressurization of the liquefied gas tank (2) and the cooling of at least part of the transfer circuit, a step in which liquefied gas is transferred from the source (4) to the liquefied gas tank (2) via the first transfer pipe (3) .

7. Method according to any one of Claims 1 to 6, **characterized in that** the liquefied gas is hydrogen or helium.
